# EUROPEAN PATENT SPECIFICATION

(11) **EP 2 662 317 B1**
(45) Date of publication and mention of the grant of the patent: **03.02.2016**
(21) Application number: 13167153.9
(22) Date of filing: 08.05.2013
(51) Int. Cl.: B65F 1/14

(54) **Compressing device**
Pressvorrichtung
Dispositif de compression

(30) Priority: 10.05.2012 NL 2008789
(43) Date of publication of application: 13.11.2013
(73) Proprietor: ECOnX Waste Solutions B.V., 5684 PL Best (NL)
(72) Inventor: Ariesen, Pel, 1241 ES Kortenhoef (NL)
(74) Representative: Verhees, Godefridus Josephus Maria

(56) References cited:
- WO-A1-2009/106522
- WO-A1-2012/015664
- WO-A2-2004/110659
- US-A1- 2012 073 456
- US-B1- 7 007 598

## Description

### Field of the invention

The invention relates to a compaction apparatus according to the preamble of claim 1 comprising:
- a waste insertion pillar to be placed on an underground waste container and provided with a lockable waste insertion opening and a waste compaction opening;
- a control cabinet located beside the waste insertion pillar;
- a waste compaction ram located inside the waste insertion pillar and displaceable between a retracted position away from the waste discharge path from the waste insertion opening to the waste compaction opening and a compaction position for the waste compaction opening;
- a solar panel located on an outside surface of the waste insertion pillar and/or control cabinet;
- a storage battery located in the control cabinet;
- driving means which are powered by the storage battery and are coupled to the waste compaction ram for displacing the waste compaction ram;
- a level sensor which emits a signal if the waste in the waste insertion pillar rises above a certain level; and
- a controller connected to the storage battery and level sensor for controlling the driving means if the level sensor emits a signal.

### State of the art

A compaction apparatus of this type is known from EP 1 638 704 A. In this known compaction apparatus the controller skips a compaction cycle when the storage battery is charged insufficiently to carry out a compaction cycle, until the storage battery has been charged sufficiently by the solar panel.

A compaction apparatus according to the preamble of claim 1 is known from WO 2004/110 659 A2.

### Summary of the invention

It is an object of the invention to improve the known compaction apparatus. For this purpose the compaction apparatus according to the invention is characterized in that the compaction apparatus further includes a back-up battery which is connected to the driving means and to the controller, where the controller, if during a compaction stroke the charging level of the storage battery drops below a preset limit value at which the waste compaction ram cannot finish the compaction stroke, couples the back-up battery to the driving means and controls the driving means to cause the waste compaction ram to go back to the retracted position. In the compaction apparatus according to the invention there is thus no mention of a compaction cycle being skipped. The compaction cycle is always started and if it should turn out that the storage battery is charged insufficiently, the waste compaction ram is caused to go back to the retracted position by means of the back-up battery. As a result, all energy in the storage battery is used for compacting the waste and compacting is not waited for if there is still energy left in the battery with which a compaction cycle can be partly executed.

An advantageous embodiment of the compaction apparatus according to the invention is characterized in that the controller, if the charging level of the storage battery drops below the preset limit value during the compaction stroke, controls a locking mechanism which closes off the waste insertion opening and does not release it until the charging level of the storage battery has reached the preset limit value.

A further embodiment of the compaction apparatus according to the invention is characterized in that the compaction apparatus further includes a sliding panel which is displaceable between a closed position, in which the sliding panel closes off the waste compaction opening and a release position in which the sliding panel releases the waste compaction opening, which sliding panel is connected to further driving means which are also coupled to the controller and to the storage battery and displace the sliding panel to the release position when the compaction stroke commences, and move the sliding panel to the closed position when the compaction stroke is finished. As a result, the compacted waste in the waste container is retained in compacted state by the sliding panel so that the waste compacts itself.

A still further embodiment of the compaction apparatus according to the invention is characterized in that the waste insertion pillar and the control cabinet can be displaced relative to each other along a guide which is connected to the waste insertion pillar and/or the control cabinet. As a result, a waste compaction chamber located in the waste insertion pillar and a waste insertion bin present in the waste insertion opening are easily accessible so that any jams can be eliminated in a fast manner.

### Brief description of the drawings

The invention will now be described in more detail below based on an example of embodiment of the compaction apparatus according to the invention while reference is made to the appended drawing figures, in which:
Fig. 1 shows an embodiment of the compaction apparatus according to the invention present on a waste container;
Fig. 2 shows the compaction apparatus with a waste insertion pillar pushed away from the control cabinet;
Fig. 3 shows the compaction apparatus with the waste insertion bin in closed position, the waste compaction ram in retracted position and the sliding panel in release position;
Fig. 4 shows the compaction apparatus with the waste insertion bin in open position, the waste compaction ram in retracted position and the sliding panel in closed position;
Fig. 5 shows the compaction apparatus with the waste insertion bin in closed position, the waste compaction ram in compacting position and the sliding panel in release position;
Fig. 6 shows the compaction apparatus with the waste insertion bin in closed position, the waste compaction ram in compacting position and the sliding panel in closed position;
Fig. 7 shows the compaction apparatus with the waste insertion bin in closed position, the waste compaction ram in retracted position and the sliding panel in closed position; and
Fig. 8 shows the compaction apparatus with the waste insertion bin in open position, the waste compaction ram in retracted position and the sliding panel in closed position.

### Detailed description of the drawings

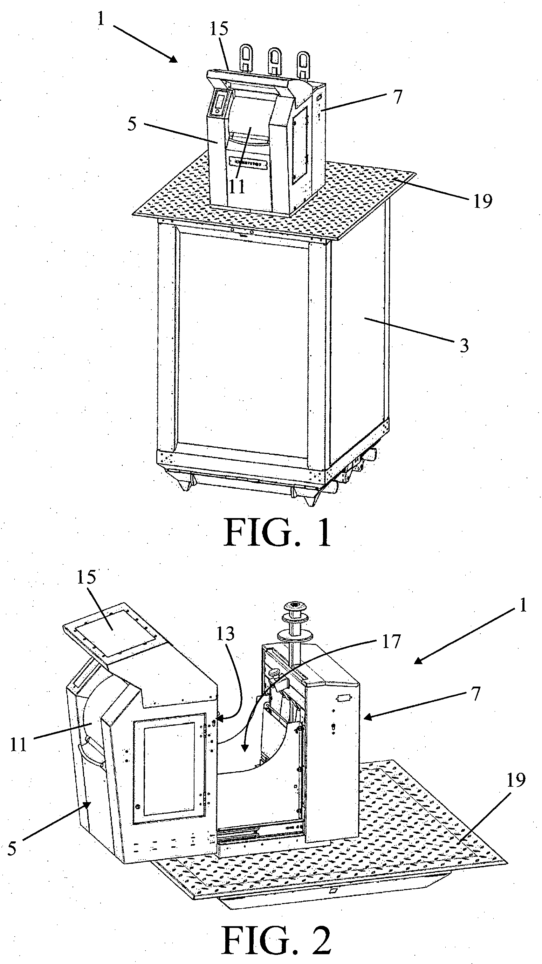

Fig. 1 shows an embodiment of the compaction apparatus 1 according to the invention present on an underground waste container 3. The compaction apparatus comprises a waste insertion pillar 5 and a control cabinet 7 beside this waste insertion pillar. The waste insertion pillar has a lockable waste insertion opening 9 for receiving waste. Immediately behind this waste insertion opening there is a rotatable waste insertion bin 11 via which the waste is allowed in and by which the waste insertion opening can be closed and opened. A rear side 13 of the waste insertion pillar is open and is closed off by the control cabinet. Solar panels 15 are located on an outside surface of the waste insertion pillar and of the control cabinet, which solar panels power the compaction apparatus.

In order to have easy access to the waste compaction chamber 17 and the waste insertion bin 11 in the event of a clogged waste insertion pillar, the waste insertion pillar 5 can be moved to the front relative to the control cabinet 7, so that the rear side 13 of the waste insertion pillar is easily accessible. For illustrative purposes Fig. 2 shows the compaction apparatus 1 where the waste insertion pillar 5 is moved aside away from the control cabinet 7. The control cabinet is equipped with fixed rails 8a in which a movable rail 8b can be displaced. Guide elements connected to the waste insertion pillar can be displaced in this movable rail. As a result, the waste insertion pillar can be displaced over a large distance. The control cabinet is fitted to a cover 19 which closes off the top of the waste container 3.

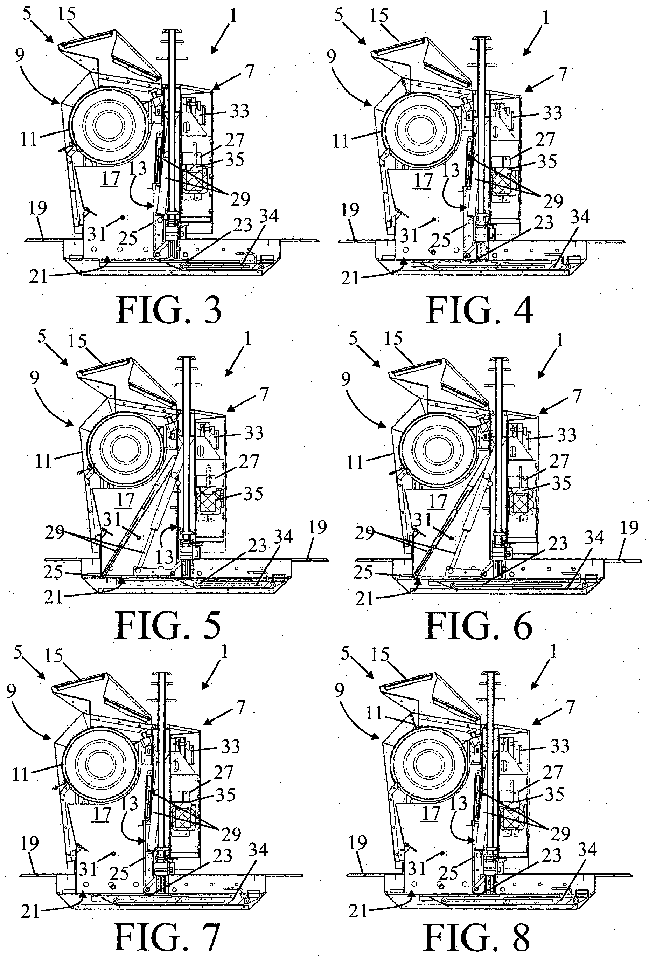

Fig. 3 shows a sectional view of the compaction apparatus 1 in resting position. The waste insertion pillar 5 has a waste compaction opening 21 at the bottom which opening can be closed by a sliding panel 23. In the waste insertion pillar is located a waste compaction ram 25 which can be displaced between a retracted position shown in Fig. 3 out of reach of the drop path of the waste from the waste insertion opening 9 to the waste compaction opening, and a compaction position in which the waste compaction ram 25 is located in front of the waste compaction opening 21. The control cabinet 7 accommodates a storage battery 27 coupled to the solar panels, as well as driving means 29 which are powered by the storage battery and are coupled to the waste compaction ram 25 for moving same.

To the inside of a side wall of the waste insertion pillar 5 is fitted a level sensor 31 which emits a signal if the waste in the waste insertion pillar rises above a preset level. This level sensor is connected to a controller 33 located in the control cabinet 7. This controller is further connected to the storage battery 27 and the driving means 29 and controls the latter if the level sensor emits a signal. The control cabinet 7 further accommodates a back-up battery 35 which is connected to the driving means 29 and to the controller 33. If during a compaction stroke the charging level of the storage battery drops below a preset limit value at which the waste compaction ram cannot finish the compaction stroke, the controller couples the back-up battery to the driving means and the controller controls the driving means to cause the waste compaction ram to go back to the retracted position.

The controller also controls a locking mechanism if the charging level of the storage battery drops below the preset limit value during the compaction stroke. This locking mechanism (not shown in the drawing figure) blocks the waste insertion bin in closed position while the latter closes off the insertion opening, and does not unblock the waste insertion opening until the charging level of the storage battery has reached the preset limit value.

The controller 33 is also connected to further driving means 34 which can displace the sliding panel 23 between a closed position, in which the sliding panel shuts off the waste compaction opening, and a release position, in which the sliding panel releases the waste compaction opening. These further driving means displace the sliding panel at the start of the compaction stroke to the release position and at the end of the compaction stroke to the closed position.

Figs. 3 to 8 show the compaction apparatus during various stages in the compaction cycle. In the resting position of the compaction apparatus shown in Fig. 3 the waste insertion bin 11 is in a closed position and closes the waste insertion opening 9. In this resting position the waste compaction ram 25 finds itself in retracted position and the sliding panel 23 finds itself in the release position. In Fig. 4 the compaction apparatus is shown during the inserting of waste. In this situation the waste insertion bin 11 finds itself in an open position in which waste can be discharged of in the waste insertion bin. By then turning the waste insertion bin to the closed position again, the waste drops down from the waste insertion bin. In the situation shown in Fig. 4 the waste compaction ram 25 is present in retracted position and the sliding panel 23 in the closed position to retain the either or not compacted waste of the waste container 3 under pressure in the container.

Fig. 5 shows the compaction apparatus immediately after the compaction motion of the waste compaction ram. During this action the waste insertion bin 11 is in a closed position, the waste compaction ram 25 is present in the compaction position and the sliding panel 23 has adopted the release position to let the waste pass through to the waste container. Before the waste compaction ram is caused to go back to the retracted position, the sliding panel is taken to the closed position to keep the waste present in the waste container compacted. This situation is shown in Fig. 6. Subsequently, the waste compaction ram 25 is moved to the retracted position, which is shown in Fig. 7. Then the waste insertion bin 11 can again be brought back to the open position by hand for discharging waste into the waste insertion pillar. This is shown in Fig. 8.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims.

## Claims

1. A compaction apparatus (1) comprising:
- a waste insertion pillar (5) to be placed on an underground waste container (3) and provided with a lockable waste insertion opening (9) and a waste compaction opening (21);
- a control cabinet (7) located beside the waste insertion pillar;
- a waste compaction ram (25) located inside the waste insertion pillar and displaceable between a retracted position away from the waste discharge path from the waste insertion opening to the waste compaction opening and a compaction position for the waste compaction opening;
- a solar panel (15) located on an outside surface of the waste insertion pillar and/or control cabinet;
- a storage battery (27) located in the control cabinet;
- driving means (29) which are powered by the storage battery and are coupled to the waste compaction ram for displacing the waste compaction ram;
- a level sensor (31) which emits a signal if the waste in the waste insertion pillar rises above a certain level; and
- a controller (33) connected to the storage battery and level sensor for controlling the driving means if the level sensor emits a signal,
**characterized in that** the compaction apparatus (1) further includes a back-up battery (35) which is connected to the driving means (29) and to the controller (33), where the controller, if during a compaction stroke the charging level of the storage battery (27) drops below a preset limit value at which the waste compaction ram cannot finish the compaction stroke, couples the back-up battery to the driving means and controls the driving means to cause the waste compaction ram to go back to the retracted position.

2. A compaction apparatus (1) as claimed in claim 1, **characterized in that** the controller (33), if the charging level of the storage battery (27) drops below the preset limit value during the compaction stroke, the controller controls a locking mechanism which closes off the waste insertion opening (9) and does not release it until the charging level of the storage battery has reached the preset limit value.

3. A compaction apparatus (1) as claimed in claim 1 or 2, **characterized in that** the compaction apparatus further includes a sliding panel (23) which is displaceable between a closed position in which the sliding panel closes off the waste compaction opening (21) and a release position in which the sliding panel releases the waste compaction opening, which sliding panel is connected to further driving means (34) which are also coupled to the controller (33) and to the storage battery (27) and displace the sliding panel to the release position when the compaction stroke commences, and move the sliding panel to the closed position when the compaction stroke is finished.

4. A compaction apparatus (1) as claimed in claim 1 or 2, **characterized in that** the waste insertion pillar (5) and the control cabinet (7) can be displaced relative to each other along a guide (8a, 8b) which is connected to the waste insertion pillar and/or the control cabinet.

## Patentansprüche

1. Eine Verdichtungsvorrichtung (1), umfassend:
- eine Abfalleinführungssäule (5) die auf einem unterirdischen Abfallbehälter (3) gestellt werden soll mit einem verschließbaren Abfalleinschuböffnung (9) und ein Abfallverdichtungsöffnung (21);
- ein Schaltschrank (7) neben dem Abfalleinführungssäule;
- ein Abfallverdichtungsstempel (25) im Inneren des Abfalleinführungssäule und bewegbar zwischen einer zurückgezogenen Position weg von dem Abfuhrpfad von der Abfalleinführungsöffnung zu dem Abfallverdichtungsöffnung und einer Verdichtungsstellung welche sich vor den Abfallverdichtungsöffnung befindet;
- ein Solarpanel (15) angeordnet an einer Außenfläche des Abfalleinführungssäule und/oder der Schaltschrank;
- eine Speicherbatterie (27) angeordnet in dem Schaltschrank;
- Antriebsmittel (29), die von der Batterie gespeist werden und gekoppelte sind mit der Abfallverdichtungsramme zum verschieben des Abfallverdichtungsramme;
- einen Pegelsensor (31), der ein Signal abgibt, wenn der Abfall in den Abfalleinführungssäule über ein bestimmtes Niveau ansteigt; und
- eine Steuerung (33) die verbunden ist mit der Speicherbatterie und mit der Niveausensor zum Steuern der Antriebseinrichtung wenn der Pegelsensor ein Signal abgibt,
**dadurch gekennzeichnet, daß** die Verdichtungsvorrichtung (1) ferner eine Reservebatterie (35) umfasst, die mit den Antriebsmitteln (29) und mit der Steuerung (33) verbunden ist, wobei der Steuerung, wenn während eines Verdichtungstakt das Ladeniveau der Akkumulator (27) unter einen vorgegebenen Grenzwert herunter fällt, bei dem die Abfallverdichtungsramme das Verdichtungstakt nicht beenden kann, die Backup-Batterie mit der Antriebseinrichtung koppelt und die Antriebsmittel steuert, um die Abfallverdichtungsramme zurück zu führen in den zurückgezogenen Position.

2. Eine Verdichtungsvorrichtung (1) nach Anspruch 1, **dadurch gekennzeichnet, dass** die Steuerung (33), wenn der Ladezustand der Speicherbatterie (27) unter dem vorgegebenen Grenzwert während des Verdichtungstakt abfällt, eine Verriegelungsmechanismus steuert, der der Abfalleinführöffnung (9) schliesst und nicht mehr frei gibt, bis der Ladezustand der Batterie den vorgegebenen Grenzwert erreicht hat.

3. Eine Verdichtungsvorrichtung (1) nach Anspruch 1 oder 2, **dadurch gekennzeichnet, daß** die Verdichtungsvorrichtung ferner eine Schiebewand (23) umfasst, der zwischen einer geschlossenen Position, in welcher die Schiebewand die Abfallverdichtungsöffnung (21) verschließt, und einer Freigabeposition, in welcher die Schiebewand des Abfallverdichtungsöffnung freigibt, bewegbar ist, welche Schiebewand mit weitere Antriebseinrichtung (34) verbunden ist, die ebenfalls mit der Steuerung (33) und mit der Speicherbatterie (27) gekoppelt ist und die Schiebewand in die Freigabeposition verschiebt wenn der Verdichtungshub beginnt, und den Schiebewand in die geschlossene Position bewegt wenn der Verdichtungstakt beendet ist.

4. Eine Verdichtungsvorrichtung (1) nach Anspruch 1 oder 2, **dadurch gekennzeichnet, dass** die Abfalleinführungssäule (5) und der Schaltschrank (7) relativ zueinander entlang einer Führung verschiebbar sind (8a, 8b) welche Führung mit dem Abfall Einsetzen Säule und/oder den Schaltschrank verbunden ist.

## Revendications

1. Dispositif de compactage (1) comprenant:
- une colonne d'insertion de déchets (5) destiné à être placé sur un récipient à déchets sous terre (3) et pourvu d'une ouverture d'introduction des déchets verrouillable (9) et une ouverture de compactage de déchets (21);
- une armoire de commande (7) situé à côté du pilier d'insertion des déchets;
- un vérin de compactage de déchets (25) situé à l'intérieur de la colonne d'introduction de déchets et pouvant être déplacé entre une position rétractée à distance du trajet d'évacuation de déchets à partir de l'ouverture d'introduction des déchets à l'ouverture de compactage des déchets et une position de compactage pour l'ouverture de compactage des déchets;
- un panneau solaire (15) situé sur une surface extérieure de la colonne d'introduction de déchets et/ou armoire de commande;
- une batterie d'accumulateurs (27) situé dans l'armoire de commande;
- des moyens d'entraînement (29) qui sont alimentés par la batterie d'accumulateurs et sont couplés à la perdre piston de compactage pour déplacer le vérin de compactage des déchets;
- un capteur de niveau (31) qui émet un signal si les déchets dans la colonne d'insertion des déchets se élève au-dessus d'un certain niveau; et
- un contrôleur (33) connecté à la batterie de stockage et un capteur de niveau pour commander le moyen d'entraînement lorsque le capteur de niveau émet un signal,
**caractérisé en ce que** le dispositif de compactage (1) comprend en outre une batterie de secours (35) qui est connecté aux moyens d'entraînement (29) et au dispositif de commande (33), où le dispositif de commande, si au cours d'une course de compression du niveau de charge l'accumulateur (27) descend au-dessous d'une valeur limite prédéfinie à laquelle le vérin de compactage des déchets ne peut pas terminer la course de compactage, couple la batterie de secours au moyen d'entraînement et contrôle le moyen d'entraînement pour entraîner le vérin de compactage de déchets de revenir à la position rétractée.

2. Dispositif de compactage (1) selon la revendication 1, **caractérisé en ce que** le dispositif de commande (33), si le niveau de charge de la batterie de stockage (27) chute en dessous de la valeur limite prédéfinie pendant la course de compression, commande un dispositif de verrouillage mécanisme qui ferme l'ouverture d'introduction des déchets (9) et ne libère pas jusqu'à ce que le niveau de la pile de stockage de charge a atteint la valeur limite préétablie.

3. Dispositif de compactage (1) selon la revendication 1 ou 2, **caractérisé en ce que** le dispositif de compactage comprend en outre un panneau coulissant (23) qui est déplaçable entre une position fermée dans laquelle le panneau coulissant ferme l'ouverture de compactage de déchets (2 ) et une position de libération dans laquelle le panneau coulissant libère l'ouverture de compactage des déchets, lequel panneau coulissant est relié à un moyen d'entraînement supplémentaire (34) qui sont également couplés au dispositif de commande (33) et à la batterie d'accumulateurs (27) et déplacer le coulissement panneau à la position de libération lorsque la course de compactage commence, et déplacer le panneau coulissant à la position fermée lorsque la course de compactage est terminé.

4. Dispositif de compactage (1) selon la revendication 1 ou 2, **caractérisé en ce que** l'insertion des déchets pilier (5) et l'armoire de commande (7) peuvent être déplacés par rapport à l'autre le long d'un guide (8a, 8b) qui est reliée à la colonne d'insertion de déchets et/ou de l'armoire de commande.
